# EUROPÄISCHE PATENTSCHRIFT

(11) **EP 2 925 929 B1**
(45) Veröffentlichungstag und Bekanntmachung des Hinweises auf die Patenterteilung: **04.09.2019**
(21) Anmeldenummer: 13814429.0
(22) Anmeldetag: 03.12.2013
(51) Int. Cl.: E01B 3/46

(54) **BAHNSCHWELLE AUS FASERVERSTÄRKTEM STEINGUT**
RAILWAY SLEEPER COMPOSED OF FIBRE-REINFORCED STONEWARE
TRAVERSE DE RAIL DE CHEMIN DE FER EN MATÉRIAU PIERREUX RENFORCÉ PAR DES FIBRES

(30) Priorität: 03.12.2012 DE 202012011524 U
(43) Veröffentlichungstag der Anmeldung: 07.10.2015
(73) Patentinhaber: Kuse, Kolja, 81925 München (DE); Müller, Matthias, 52399 Merzenich (DE); Ömer, Bucak, 76356 Weingarten (DE)
(72) Erfinder: Kuse, Kolja, 81925 München (DE); Müller, Matthias, 52399 Merzenich (DE); Ömer, Bucak, 76356 Weingarten (DE)
(86) Internationale Anmeldenummer: PCT/EP2013/003647
(87) Internationale Veröffentlichungsnummer: WO 2014/086481

(56) Entgegenhaltungen:
- BR-U- MU8 502 972
- CH-A- 263 584
- DE-U1-202010 009 863
- DE-U1-202011 103 383
- US-A- 562 974
- US-A- 4 286 753

## Beschreibung

Die vorliegende Erfindung bezieht sich auf die Entwicklung von Bahnschwellen, die für das Tragen und Verlegen von Bahnschienen, zum Beispiel Eisenbahnschienen und deren Befestigung und Verankerung im Untergrund benötigt werden.

Solche Schwellen liegen typischerweise im Schotterbett und werden üblicherweise in einem Abstand von einem 2/3 Meter verlegt.

Die Herausforderung bei der baulichen Umsetzung von Teilen, die bisher teilweise mit relativ einfachen Mitteln aus Holz herstellbar waren, müssen mehr und mehr aus künstlichen Werkstoffen gefertigt werden, da vor dem Hintergrund des mittlerweile nicht mehr bestrittenen Klimawandels Holz als Massenanwendung zur Mangelware wird.

Neuere Bauformen sind auf Beton übergegangen, der mit Hilfe konstruktiver Mittel so vorgespannt werden muss - zum Beispiel mit in den Beton vergossenen Stahl- oder Stahlgewinde-Stangen, die nach dem Aushärten des Betons mit Hilfe von Muttern an den Enden unter Druck gesetzt werden - dass dem Beton die fehlende Zugstabilität durch eine fest eingestellte Vorpannungsreserve gegeben wird. Diese wird über das Drehmoment beim Festziehen der Mutter eingestellt. Der Nachteil ist, dass solche Gewindestangen entweder rosten oder, wenn sie aus Edelstahl sind, abreißen können oder über die Zeit auch einen Teil der Vorspannung verlieren. Der Beton kann dann noch schneller brüchig und rissig werden, Feuchtigkeit und Frost und die Veränderung des Betons über die Zeit tun dann ihr übriges, um die Schwelle zu zerstören und die Tragfähigkeit zu beeinträchtigen. Bei Betonschwellen werden Risse und Haarrisse ohnehin bei der Dimensionierung mit eingeplant, da sich diese im Spannbeton - zumindest auf der Zugseite - nicht verhindern lassen. Bei den erforderlichen Belastungstests werden Haarrisse im Zugbereich als zulässig hingenommen. Holzschwellen zeigen keine Haarrissbildung, verwittern dafür schneller.

Ziel ist es nun eine Schwelle zu bauen, der Holzreserven schont, durch das Ausschalten von Rissbildung langlebiger als Betonschwellen ist und vor allem bei ihrer Herstellung mit einem leichten CO₂-Rucksack im Vergleich zu Schwellen aus Stahl und Beton ausgestattet ist. Die Herstellung von Beton und Stahl benötigt viel Energie, die heute leider mit einer großen Menge an CO₂- Emissionen, die bei ihrer Herstellung entstehen, verbunden ist.

Weiterhin soll ein universelles neues Konzept entstehen, welches weltweit in unterschiedlichsten klimatischen Bedingungen einsetzbar ist, gegen minimale sowie maximale Temperaturwerte unempfindlich ist und Einflüsse wie Luftfeuchtigkeit, Witterungseinflüsse wie Wasser, Frost und Luftchemie den verwendeten Materialien keinen Schaden zufügen, damit sie nachhaltiger werden und dauerhafte Lösungen darstellen, die generationenübergreifend stabil bleiben und so gut wie überall mit Hilfe lokaler Ressourcen hergestellt werden können. Eine weitere Rolle spielt das Gewicht, die Festigkeit, die Verarbeitbarkeit und zuletzt auch die Art der Oberfläche, nicht nur wegen der Reinigungsaspekten, auch deren Farbe und optischer Eindruck entscheiden über Zweckmäßigkeit einer Lösung und die Anpassung an jeweilige Gegebenheiten, sei es in der Natur oder in eher geschlossenen Räumen wie Bahnhöfen oder auch offenen Bahnsteigen.

Die hier vorgeschlagene Idee ist ein Sandwich von Materialien zu konfigurieren, welches oben genannte Problemfelder weitgehend gleichzeitig löst. Ziel ist die Optimierung dauerhafter, nicht veränderlicher Tragfähigkeits- und Festigkeitswerte, der Schwingungsdämpfung, eine leichte Verarbeitbarkeit im Hinblick auf die Verbindung mit der Schiene, die rissfreie langfristige Haltbarkeit des Teils selbst, sowie die Dauerhaftigkeit der Oberfläche und die Möglichkeit der Integration von weiteren Funktionalitäten. Diese können zum Beispiel die Einspeisung von elektrischer Energie in die Schiene mit Hilfe von Solarzellen, Warmwasseraufbereitung durch den sich aufheizenden Stein und damit verbundene energietechnische Lösungen umfassen. Bisherige Lösungen betrachten in erster Linie nur die Festigkeitswerte. Wesentlich weiterführendes Ziel ist die Senkung der Herstellungsenergie, die für Bahnschweller heute eingesetzt werden muss, um die Teile zu produzieren. Der hier vorgeschlagene Weg soll eine neue Plattform für die oben beschriebenen Weiterentwicklungen solcher Schwellen bilden. Die Herstellung einer solchen Schwelle aus Granit ist mit einer Größenordnung weniger an Herstellungsenergie im Vergleich zu einer Schwelle aus Beton verbunden. Als nächstes ist die Herstellungsenergie der stabilisierenden Materialien zu betrachten, früher Stahl, soll nunmehr durch Fasermaterial eingesetzt werden. Künftig kann auch die bevorzugt verwendete Carbonfaser, sowie auch die nötige Matrix bestehend aus modernen Harzsystemen über den Umweg von nachwachsenden Rohstoffen auf pflanzlicher Basis aus dem CO₂ in der Atmosphäre gewonnen werden und dieses schädliche CO₂ über entsprechende Zeiträume dauerhaft der Atmosphäre entzogen und ebenso dauerhaft im Baumaterial selber gebunden werden.

Die vorliegende Erfindung beschreibt demgemäß ein Sandwich aus mehreren Platten aus Naturstein oder künstlichem Steingut, wie zum Beispiel Beton oder Keramik, die mit Hilfe einer Zwischenschicht aus Fasermaterial und verbindender Matrix - zum Beispiel Epoxid-Harze oder auch sonstige klebstoffartige Vernetzungsmöglichkeiten - miteinander verbunden sind. Erfindungsgemäß wird dieser Verbund aus Stein, Fasermaterial und Harz so gestaltet, dass die Faserschichten die Steinplatten in sich bereits vorspannen, so dass kein aufwändiges Vorspannen mit Gewindestangen oder Zugstangen aus Stahl mehr nötig ist. Diese Vorspannung sollte vorzugsweise durch eine solche Art von Faser erzeugt werden, welche diese Vorspannung auch nicht mehr verliert. Am geeignetsten haben sich Carbonfasern und Steinfasern hierfür erwiesen, so wie z. B. in EP 106 20 92 dargelegt. Dabei können prinzipiell alle möglichen Natursteinarten verwendet werden.

Die Oberflächen-Abschlüsse werden erfindungsgemäß auch durch eine Steinschicht gebildet, um die Witterungseinflüsse abzufangen. Idealerweise besteht die Schwelle aus drei Steinplatten, wobei die mittlere Platte aus mechanischen Gründen deutlich dicker als Balken ausgeführt sein kann, als die obere und untere Deckplatte. Aus derzeitiger Sicht sind Epoxid-Harze gut geeignet die Verbindung zwischen Faser und Stein herzustellen, insbesondere, wenn die Porosität des Steins für das Eindringen des Harzes geeignet ist.

An der Oberseite dieses Plattenverbundes werden Löcher gebohrt, in welche die Befestigungsstifte der Tragplatte mit Hilfe von Dübeln eingeschraubt werden, wobei die Tragplatte der Schiene, die sogenannte Rippenplatte, eine übliche Tragplatte darstellt, welche ihrerseits die Verschraubung mit den die Schienen fassenden Klammern erlaubt.

Da die fertige Stein-Schwelle beim Herstellungsprozess im Ofen automatisch durch die Fasermatrix vorgespannt wird, kann er nach Aushärtung dynamische Druck- und Zugkräfte aufnehmen und nutzt dabei die guten selbstdämpfenden Eigenschaften von zum Beispiel Granit, um Eigenschwingungen im System schnell wieder abzubauen. Der Granit, welcher nicht viel mehr wiegt als Aluminium, wird mit Hilfe der Faser zum High-Tech-Material und besitzt eine Druckstabilität vergleichbar mit der von Stahl, die fehlende aber nötige Zugstabilität wird dem Material durch Vorspannung mit Hilfe von dünnen Schichten Carbonfasern gegeben. Granit ist auf der Erde in unbegrenzten Mengen vorhanden und das in fast jedem Land. Da es künftig möglich werden wird, Carbonfasern auch aus dem CO₂ in der Atmosphäre herzustellen, wird es möglich nicht nur Materialien zu entwickeln, die weniger Herstellungsenergie benötigen, sondern auch in der Lage sind - wie zuvor das Holz - den in der Atmosphäre schädlichen Kohlenstoff, der von der Klimaforschung als Ursache von einem Großteil der klimatischen Veränderungen auf der Erde identifiziert wurde, zu binden.

Da Granit und auch andere Gesteine trotz relativer Wasseraufnahmefähigkeit frostsicher sind, gibt es auch bei extremsten Minus-Temperaturen dabei keine Probleme. Es gibt kaum ein haltbareres Material als Granit oder Basalt. Sollte anfänglich für eine Umstellung noch nicht genügend Granit zur Verfügung stehen, können interimsweise auch Betonplatten hergestellt und mit den Fasern vorgespannt werden.

Zusätzlich soll die Schwelle die Option bekommen mit Hilfe von aufgebrachten Photovoltaik-Modulen elektrischen Strom zu erzeugen. Dieser kann direkt über die Schiene in Stromnetze eingespeist werden.

Zu diesem Zweck werden auf die Steinoberfläche entweder direkt oder mit Hilfe eines Rahmens Solarpaneele aufgebracht. In der Regel können das heute auch die mittlerweile in Relation zu älteren Techniken kostengünstigen Dünnschicht-Module sein, die teils auch direkt auf die Steinoberfläche geklebt werden können und/oder mit Hilfe von geeigneten Rahmen die Flächen zwischen den Schwellen nutzen, wobei die Rahmen zweckmäßigerweise auf den Schwellen befestigt werden.

Die Schiene selbst kann die Funktion der Stromleitung übernehmen, wobei die Solarmodule direkt mit Plus- und Minuspol an die Schienen angeschlossen werden.

Die Schwellen können innen auch hohl ausgeführt werden, als Kastenprofil, entweder, um Gewicht zu sparen, oder um Kabelschächte für die Durchleitung von stromführenden Kabeln oder Kommunikationsadern zur Verfügung zu stellen.

Der Stand der Technik beschreibt bereits Betonanordnungen für Bahnschwellen, welche mit Glasfasern stabilisiert werden, zum Beispiel in der DE-202010009863, bei der Zwirne, Fäden oder Bänder aus Glasfasern in die Betonstruktur verteilt eingearbeitet werden.

Die BR-MU-8502972-U beschreibt bereits laminare Beton-Strukturen für Bahnschwellen, die aus mehreren Schichten bestehen, die sich unter anderem aus Beton, Kunststofffasern und Stahl zusammensetzen, wobei die Faser- und Stahlschicht jeweils oben und unten im Verbund die Zugbewehrung sicherstellt.

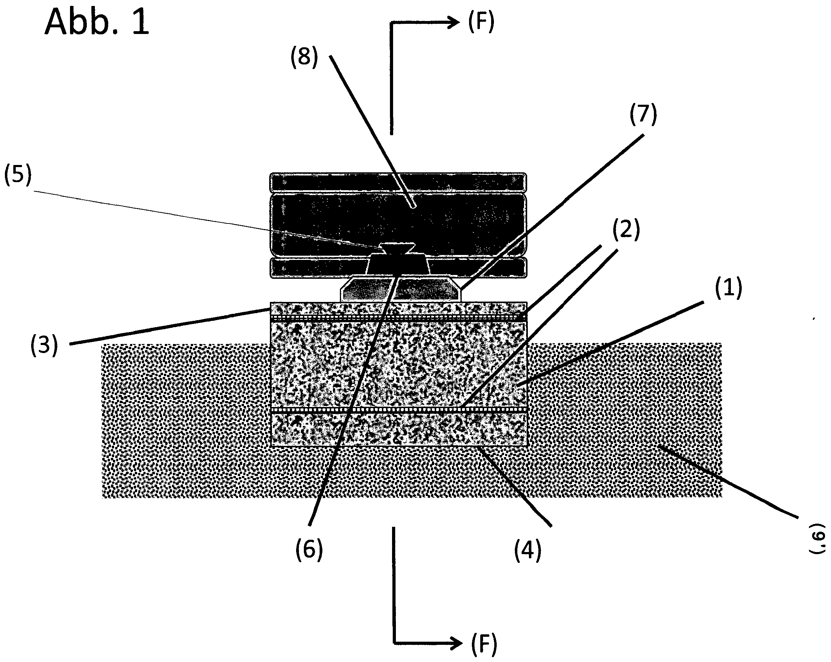

Eine der vielen möglichen Ausführungen der Erfindung beschreibt in Abb. 1 die Seitenansicht einer ca. 15 cm dicken Granitplatte (1), die über eine Faserbeschichtung mit der Matrix (2) einer oberen (3) und unteren Deckplatte (4) verbunden ist. Über Schrauben-Befestigungsstifte (5) wird eine mechanische Brücke in Form einer Kunststoff-Rippenplatte (7) mit dem Plattenverbund aus Stein (1-4) festgeschraubt. Die isolierende Rippenplatte (7) trägt die Schiene (8) und erlaubt deren Befestigung mit Hilfe von Klammern (6), die von den Befestigungsstiften (5) gehalten werden und die Schiene unter Vorspannung nach unten halten. Die Schwelle selbst liegt im Schotterbett (9').

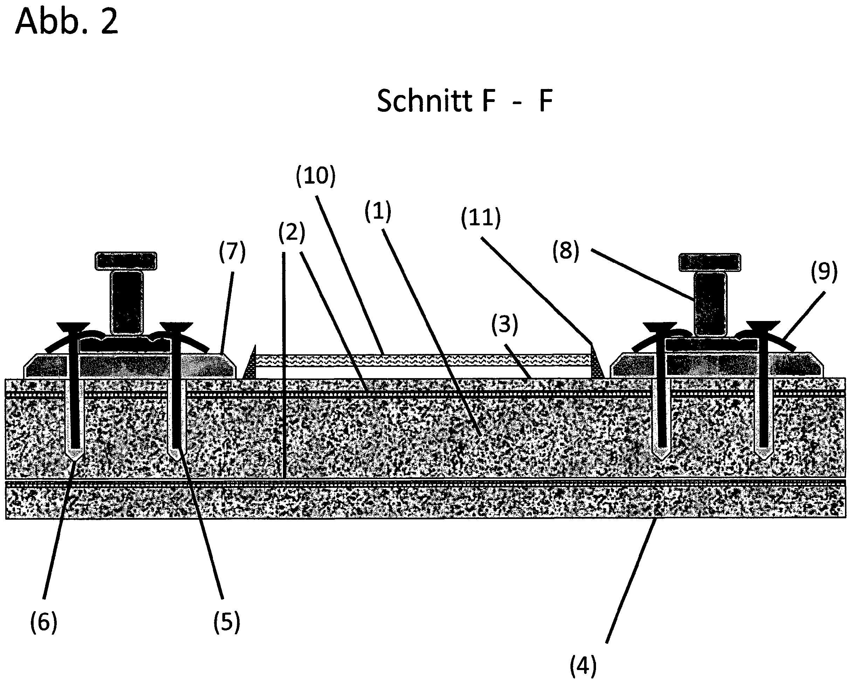

Abb. 2 zeigt den Körper in Abb. 1 im Querschnitt F - F, die ca. 15 cm dicke Granitplatte (1), die über eine Faserbeschichtung mit der Matrix (2) einer oberen (3) und unteren Deckplatte (4) verbunden ist. Über Schrauben-Befestigungsstifte (5) und Kunststoff-Dübel (6) wird eine mechanische Brücke in Form einer Kunststoff-Rippenplatte (7) mit dem Plattenverbund aus Stein (1-4) festgeschraubt. Die isolierende Rippenplatte (7) trägt die Schiene (8) und erlaubt deren Befestigung mit Hilfe von Klammern (9), die von den Befestigungsstiften (5) gehalten werden und die Schiene unter Vorspannung nach unten halten.

Auf der poliert geschliffenen Oberfläche der oberen Stein-Deckplatte ist ein Dünnschicht-Solarpaneel (10) mit Hilfe eines Rahmens (11) aufgebracht, welches ggfls. auch eine Hinterlüftung haben kann.

Interimsweise können solche Schwellen auch noch aus Beton hergestellt werden, bis genügend Steinmaterial gefunden und abgebaut wird.

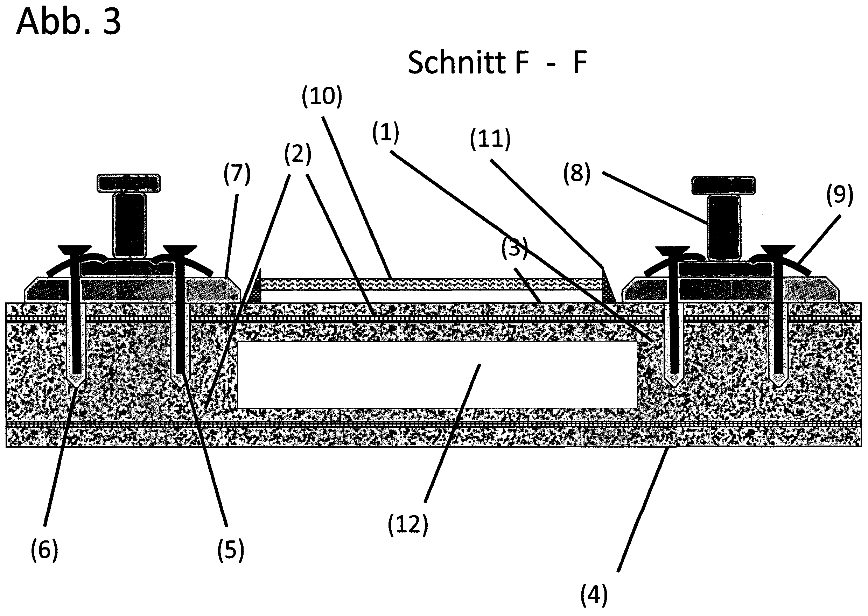

In Abb. 3 wird der Körper aus Abb. 1 im Schnitt F - F als teilweise hohl ausgeführtes Modell einer Bahnschwelle (1) mit einem innenliegenden Hohlraum (12) gezeigt.

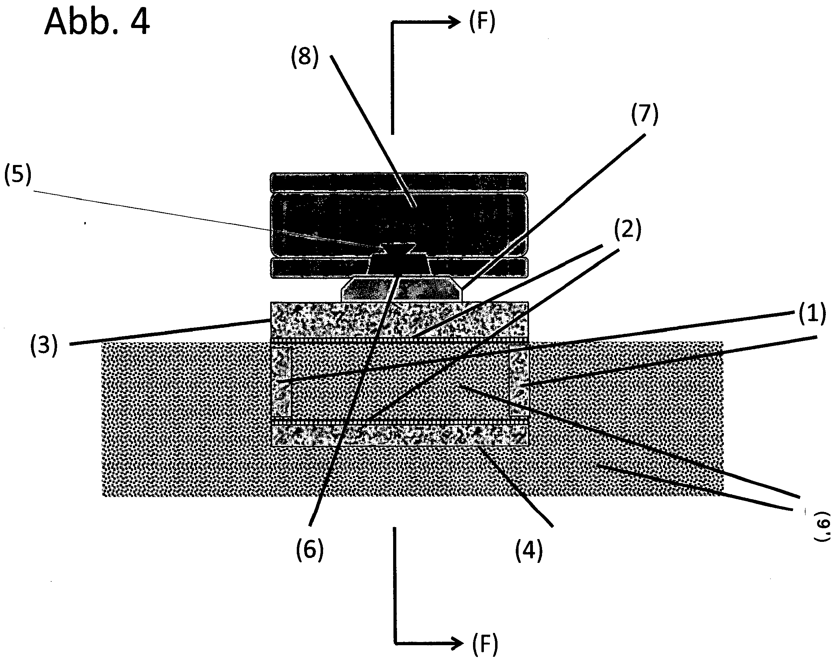

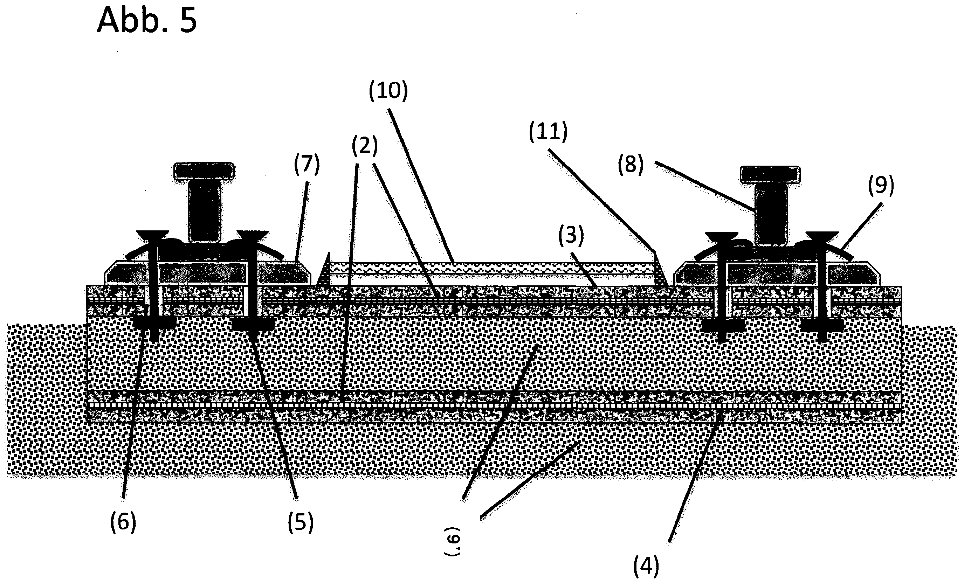

In Abbildung 4 wird der Körper aus Abb. 1 als Bahnschwellen- Hohlkörper dargestellt und in Abb. 5 dessen Schnitt F - F, wobei der an der Seite offene Hohlkörper von der Seite her mit Gleis-Schotter (9') befüllt wurde.

## Patentansprüche

1. Anordnung mit einem ebenen oder gewölbten Steingut-Balken (1), der auf seiner Oberseite und Unterseite zur Bruchsicherung mit Faserzwischenschicht und verbindender Matrix (2), sowie jeweils einer weiteren Steingut-Platte als Deckschicht (3,4) belegt ist,
- wobei die stabilisierende Faser der Faserzwischenschicht eine Glasfaser, Carbonfaser, Steinfaser, Aramidfaser, Naturfaser - wie Flachs-, Hanf-, Mais-, Baumwoll-, Holz-, Bambus oder sonstige - ggfls carbonisierte - Pflanzenfaser, Stahlfaser bzw. auch ein Gemisch aus diesen Fasern ist, die mit Hilfe von Harz gebunden und mit dem **Steingut** in Schichten verklebt sind
- und wobei der Gesamtverbund für den Einsatz als Schwelle für Bahnschienen ausgelegt ist, **dadurch gekennzeichnet, dass** die Matrix (2) aus härtenden Harzen besteht, zum Beispiel Epoxid-Harzen, thermoplastischen Harzen, Kunstharzen, oder aus regenerativen pflanzlichen Stoffen, z.B. Algen, hergestellten Harzen besteht,
- das Steingut (1,3,4) aus Natur-Hartgestein oder aus sonstigem Naturstein wie Granit, Marmor, Basalt, Sandstein, Schiefer oder auch aus Kunststein wie zum Beispiel Beton, harzgebundenen Quarz- oder Steinmehlen oder Keramik besteht,
- und dass die Faserschichten so in den Verbund gebracht werden, dass sie den Gesamtverbund im Innern unter rissschützende Vorspannung setzen.

2. Anordnung nach Anspruch 1, **dadurch gekennzeichnet, dass** die Fasermatrix (2) der faserstabilisierten Steinplatte verschiedene Fasern in unterschiedlichen Schichten enthält.

3. Anordnung nach Anspruch 1 und 2, **dadurch gekennzeichnet, dass** der Ausdehnungskoeffizient der Fasermatrix (2) kleiner als der des zu stabilisierenden Steinguts (1,3,4) ist.

4. Anordnung nach Anspruch 1 bis 3, **dadurch gekennzeichnet, dass** die Sichtseiten-Oberfläche der oberen und unteren Steingut-Platte (3,4) poliert oder geschliffen ist, um durch unterschiedliche Porosität unterschiedliches Wasseraufnahemverhalten und unterschiedliche Optik zu gewährleisten.

5. Anordnung nach Anspruch 1 bis 4, **dadurch gekennzeichnet, dass** die Oberfläche der Steingut-Platte (3) oder der Zwischneraum zwischen zwei Anordnungen als Schwellen oder beides mit einer Photovoltaik-Platte (10) belegt ist.

6. Anordnung nach Anspruch 5, **dadurch gekennzeichnet, dass** die Photovoltaik-Platte (10) einen Rahmen hat, mit Hilfe dessen das Solarmodul im Reparaturfall gewechselt werden kann.

7. Anordnung nach Anspruch 1 bis 6, **dadurch gekennzeichnet, dass** zwischen der Bahnschiene (8) und der Anordnung als Schwelle eine Rippenplatte angebracht werden kann, welche die Bahnschiene (8) mit Hilfe von Dübeln (5) - die in eine Bohrung in der Steingut-Platte (3,4) gesteckt werden -, Schrauben und Klammern (9) fassen und führen kann und ggfls. auch gleichzeitig die Bahnschiene (8) elektrisch gegen die Anordnung als Schwelle **isolieren** kann.

8. Anordnung nach Anspruch 1 bis 7, **dadurch gekennzeichnet, dass** Photovoltaikmodule elektrisch mit den beiden Bahnschienen (8) als Plus- und Minuspol verbunden werden können, über die der Strom abgeleitet werden kann.

9. Anordnung nach Anspruch 1 bis 8, **dadurch gekennzeichnet, dass** die Anordnung innen vollständig hohl ist und ein Rohr darstellt oder teilweise ausgehöhlt ist bzw. einen verschlossenen oder teilwese verschlossenen Hohlraum hat, wobei der Hohlraum (12) teilweise oder ganz mit Gleisschotter gefüllt ist.

## Claims

1. Arrangement with a flat or curved stoneware beam (1), which is covered on its top and bottom for breaking protection with fiber interlayer and connecting matrix (2) and in each case a further stoneware plate as a cover layer (3,4),
- wherein the stabilizing fiber of the intermediate fiber layer is a glass fiber, carbon fiber, stone fiber, aramid fiber, natural fiber such as flax, hemp, corn, cotton, wood, bamboo or other - if necessary carbonized - plant fiber, steel fiber or a mixture of these fibers which are bound by means of resin and glued to the stoneware in layers
- and wherein the overall composite is designed for use as a railway sleeper for railway tracks, **characterized in that** the matrix (2) consists of hardening resins, for example epoxy resins, thermoplastic resins, synthetic resins, or made up of resins of regenerative vegetable materials, for example algae,
- the stoneware (1,3,4) consists of natural hard stone or other natural stone such as granite, marble, basalt, sandstone, slate or artificial stone such as concrete, resin-bound quartz or stone flours or ceramics,
- and that the fiber layers are brought into the composite in such a way that they put the overall composite in its interior under crack-protecting bias stabilisation.

2. Arrangement according to claim 1, **characterized in that** the fiber matrix (2) of the fiber-stabilized stone plate contains different fibers in different layers.

3. Arrangement according to claim 1 and 2, **characterized in that** the coefficient of expansion of the fiber matrix (2) is smaller than that of the earthenware to be stabilized (1,3,4).

4. Arrangement according to claim 1 to 3, **characterized in that** the visible surface of the upper and lower stoneware plate (3,4) is polished or ground to ensure different water absorption characteristics and different optics by different porosity.

5. Arrangement according to claim 1 to 4, **characterized in that** the surface of the stoneware plate (3) or the intermediate space between two arrangements as sleepers or both is occupied by a photovoltaic plate (10).

6. Arrangement according to claim 5, **characterized in that** the photovoltaic plate (10) has a frame by means of which the solar module can be changed in case of repair.

7. Arrangement according to claim 1 to 6, **characterized in that** a ribbed base plate can be attached between the track rail (8) and the arrangement of the sleeper, which fixes and guides the track rail (8) by means of dowels (5) - put in a hole in the stoneware plate (3,4) -, screws and clamps (9) and at the same time can isolate the rail track (8) electrically against the arrangement of the sleeper.

8. Arrangement according to claim 1 to 7, **characterized in that** photovoltaic modules can be electrically connected to the two rail tracks (8) as plus and minus pole, via which the electrical current can be derived.

9. Arrangement according to claim 1 to 8, **characterized in that** the arrangement inside is completely hollow and is a tube or is partially hollowed or has a closed or partially sealed cavity, wherein the cavity (12) is partially or completely filled with ballast.

## Revendications

1. Agencement avec une poutre en faience de pierre plat ou cintrée (1), qui est recouverte - pour assurer la protection contre la fracture - en haut et en bas avec une couche intercalaire en fibres et la matrice de connexion (2), ainsi qu'une plaque de faience de pierre cuite supplémentaire (3,4),
dans lesquels la fibre stabilisatrice de la couche de fibres intermédiaire est une fibre de verre, de carbone, de pierre, d'aramide, de fibres naturelles telles que le lin, le chanvre, le maïs, le coton, le bois, le bambou ou d'autres fibres végétales éventuellement carbonisées, des fibres d'acier ou un mélange de ces fibres qui sont liées au moyen de résine et collées en couches sur la faience de pierre
et dans lequel le composite global est conçu pour être utilisé comme traverse de chemin de fer, **caractérisé en ce que** la matrice (2) est constituée de résines de durcissement, par exemple des résines époxy, des résines thermoplastiques, des résines synthétiques ou se compose des résines des matières végétales régénératives, par example des algues,
et le faience de pierre (1,3,4) est constitué de pierre dure naturelle ou d'une autre pierre naturelle telle que du granit, du marbre, du basalte, du grès, de l'ardoise ou de la pierre artificielle telle que du béton, des farines de quartz ou de pierre liées à la résine ou de la céramique,
et que les couches de fibres soient introduites dans le composite de manière à placer l'ensemble du composite à l'intérieur sous un biais protégeant contre des fissures.

2. Agencement selon la revendication 1, **caractérisé en ce que** la matrice de fibres (2) de la plaque stabilisée par des fibres contient différentes fibres dans différentes couches.

3. Agencement selon les revendications 1 et 2, **caractérisé en ce que** le coefficient de dilatation de la matrice fibreuse (2) est inférieur à celui de la faïence à stabiliser (1,3,4).

4. Agencement selon les revendications 1 à 3, **caractérisé en ce que** la surface visible de la plaque de faïence en pierre en haut et en bas (3, 4) est polie ou meulée pour assurer une absorption d'eau différent et une optique différente par une porosité différente.

5. Agencement selon les revendications 1 à 4, **caractérisé en ce que** la surface visible de la plaque de faience en pierre cuite (3) ou l'espace intermédiaire entre deux agencements en traverses ou les deux est occupée avec une plaque photovoltaïque (10).

6. Agencement selon la revendication 5, **caractérisé en ce que** la plaque photovoltaïque (10) présente un cadre au moyen duquel le module solaire peut être changé en cas de réparation.

7. Agencement selon les revendications 1 à 6, **caractérisé en ce qu'**un plateau de fixation peut être fixé entre le rail de chemin de fer (8) et à l'agencement de la traverse (3,4) en tant que le rail de chemin de fer (8) est fixé et dirigé avec des fentons (5),- mis dans un trou dans la plaque de faience cuite. (3,4) -, des vis et des clips (9), soit que le plateau de fixation en même temps peut isolée le rail de chemin de fer (8) électriquement contre la traverse.

8. Agencement selon les revendications 1 à 7, **caractérisé en ce que** des modules photovoltaïques peuvent être connectés électriquement aux deux rails de chemin de fer (8) en tant que pôle positif et négatif, par lesquels le courant électrique peut être dérivé.

9. Agencement selon les revendications 1 à 8, **caractérisé en ce que** l'agencement intérieur est complètement creux et est un tube ou est partiellement creux ou comporte une cavité fermée ou scellée en tôle, dans laquelle la cavité (12) est partiellement ou complètement remplie de ballast.
